Europäisches Patentamt

European Patent Office

Office européen des brevets

(19)

(11) Veröffentlichungsnummer : **0 052 601**
**B1**

(12) **EUROPÄISCHE PATENTSCHRIFT**

(45) Veröffentlichungstag der Patentschrift :
**15.05.85**

(21) Anmeldenummer : **80901008.5**

(22) Anmeldetag : **27.05.80**

(86) Internationale Anmeldenummer :
**PCT/EP 80/00030**

(87) Internationale Veröffentlichungsnummer :
**WO/8103411 (10.12.81 Gazette 81/29)**

(51) Int. Cl.⁴ : **A 01 G 27/00**

(54) **VORRICHTUNG ZUR DAUERNDEN ZUFÜHRUNG VON WASSER ZU WASSERVERBRAUCHERN IN FORM VON KULTURPFLANZEN.**

(43) Veröffentlichungstag der Anmeldung :
**02.06.82 Patentblatt 82/22**

(45) Bekanntmachung des Hinweises auf die Patenterteilung : **15.05.85 Patentblatt 85/20**

(84) Benannte Vertragsstaaten :
**AT CH DE FR GB LI LU NL SE**

(56) Entgegenhaltungen :
**DE-A- 2 610 613**
**DE-A- 2 623 117**

(73) Patentinhaber : **IPACO, International Patent and
Construction Company, reg.Trust
Altenbachstrasse 534
FL-9490 Vaduz (LI)**

(72) Erfinder : **Weninger, Peter Johann
Haag 7
A-6410 Telfs (AT)**

(74) Vertreter : **Hofinger, Engelbert et al
Torggler-Hofinger Wilhelm-Greil-Strasse 16
A-6020 Innsbruck (AT)**

Jouve, 18, rue St-Denis, 75001 Paris, France

## Beschreibung

Die Erfindung betrifft eine Vorrichtung zur dauernden Zuführung einer dem gemeinsamen Wasserbedarf von Wasserverbrauchern in Form von Kulturpflanzen angepaßten Wassermenge mit zumindest zwei Wasserabgabeeinrichtungen, die nacheinander in eine von einem Wasservorrat gespeiste Wasserleitung eingesetzt sind und unter Einwirkung der kapillaren Kräfte des Erdreiches die von den Wasserverbrauchern benötigte Wassermenge abgeben, wobei vor der ersten Wasserabgabeeinrichtung in die Wasserleitung ein Durchflußmengenregler eingesetzt ist, der von einer nach der letzten Wasserabgabeeinrichtung vorgesehenen, die dieser zufließenden Wassermenge mit der vom letzten Wasserverbraucher benötigten Wassermenge kontinuierlich vergleichenden Überwachungseinrichtung gesteuert ist.

Unter Wasserabgabeeinrichtungen werden dabei immer Einrichtungen verstanden, die das Wasser nur sehr langsam austreten lassen. Die Austrittsgeschwindigkeit ohne äußere Einwirkungen ist dabei so gering, daß ein nennenswerter Wasseraustritt nur durch Saugwirkung der Pflanzen bzw. der kapillaren Kräfte des trocknenden Erdreichs erfolgt.

Insbesondere dient die Vorrichtung zur optimalen Bewässerung von Zimmerpflanzen und Balkonpflanzen, kann aber auch für Pflanzen im Freien eingesetzt werden.

Eine derartige Bewässerungsvorrichtung ist beispielsweise der DE-A-26 10 613 zu entnehmen, die eine fortlaufende Wasserleitung zur Versorgung der Wasserverbraucher aufweist, an deren Ende die den Zufluß steuernde Überwachungseinrichtung angeordnet ist. Die Wasserleitung wird dabei durch eine offene Rinne gebildet, die gegebenenfalls in mehrere in verschiedenen Höhen angeordnete Abschnitte unterteilt ist, wobei die oberhalb der Rinne angeordneten Verbraucher das Wasser aus der Rinne mittels eines Kapillareneinsatzes entnehmen. Das fließende Wasser bildet daher eine Art Grundwasser. Am Ende der Wasserrinne wird der Wasserstand überwacht, wobei ein eintauchender Schwimmer mit dem Zuflußventil verbunden ist. Steigt der Wasserstand in der Rinne infolge eines geringen Verbrauches, wird der Zufluß gedrosselt, sinkt er hingegen stärker ab, wird der Zufluß erhöht. Dabei ist es unerheblich, welcher Wasserverbraucher mehr Wasser verbraucht, da in jedem Fall das Manko registriert wird. Es ist daher die Wasserzuführung zu jedem einzelnen Verbraucher auf dessen tatsächlichen Bedarf abgestimmt.

Eine Anpassung an den sich im Jahresablauf ändernden Wasserbedarf auf Grund der Lebensbedingungen und des Ernährungsrhythmusses ist jedoch nicht möglich.

In der DE-A-26 23 117 ist eine Bewässerungseinrichtung zur Versorgung von mehreren in verschiedenen Höhen aufgestellten Wasserverbrauchern beschrieben, wobei das Wasser von einem Vorratsbehälter durch Überlaufgefäße fließt. Dabei ist jeder Reihe von Wasserverbrauchern, die in derselben Höhe angeordnet sind, ein Überlaufgefäß in der Weise zugeordnet, daß der Wasserspiegel bei gefülltem Überlaufgefäß höher liegt als die Wasserabgabevorrichtung der jeweiligen Reihe, sodaß eine Überbewässerung stattfindet. Am Ende der Wasserleitung ist ein weiteres Gefäß in gleicher Weise angeordnet, in das das Ende einer Entlüftungsleitung des Vorratsbehälters ragt. Sobald der Wasserstand im letzten Gefäß sinkt, dringt Luft in den Vorratsbehälter ein und Wasser fließt durch die Überlaufgefäße nach. Von jedem Überlaufgefäß erstreckt sich dabei eine Stichleitung zu den einzelnen Wasserverbrauchern. Um den Wassernachschub zu bewirken ist daher ausschließlich der Wasserbedarf der tiefst angeordneten Wasserverbraucher maßgeblich. Ist deren Verbrauch zu gering, so wird den anderen höher angeordneten Wasserverbrauchern kein Wasser nachgeführt, selbst wenn diese einen höheren Wasserbedarf haben. Der auf die Wasserverbraucher vor allem der oberen Reihen wirkende statische Wasserdruck ändert sich bei mangelnder Wasserzufuhr, ist jedoch nicht den gegebenen oder gewünschten Bedingungen anpaßbar.

Eine weitere Vorrichtung dieser Art mit einem Unterdruck in der Wasserleitung zeigt die DE-OS 26 55 655. Als Wasserabgabeeinrichtung ist hierin ein Hohlkörper beschrieben, der im Wurzelbereich einer Pflanze ins Erdreich eingesteckt wird. Der oberhalb des Erdreiches zu liegen kommende Teil ist luftundurchlässig, der untere ins Erdreich einsteckbare Teil flüssigkeitsdurchlässig, bevorzugt aus gebranntem Ton. Aus einem Behälter, in dem der Wasserspiegel unterhalb des Hohlkörpers liegt, führt eine Wasserleitung in den luftundurchlässigen Teil des Hohlkörpers. Durch die kapillaren Kräfte des Erdreiches wird die dem Wasserbedarf der Pflanze entsprechende Wassermenge angesaugt. Der Wasserstand im Hohlkörper ist einstellbar, daher auch an den individuellen Bedarf anpaßbar.

Die Erfindung hat es sich nun zur Aufgabe gestellt, eine Vorrichtung der eingangs genannten Art so zu verbessern, daß der jedem Verbraucher zur Verfügung stehende Wasservorrat, der im Mittel gerade ausreichend ist, um seinen Wasserbedarf individuell zu decken, in Anpassung an besondere Gegebenheiten in einfacher Weise erhöht oder erniedrigt werden kann.

Erfindungsgemäß wird diese Aufgabe dadurch gelöst, daß am Ende eines eine Reihe von im wesentlichen in gleicher Höhe angeordneten Wasserverbrauchern versorgenden Abschnittes der Wasserleitung, die einen geschlossenen Querschnitt aufweist, eine Einrichtung zur Regulierung des statischen Wasserdruckes in diesem Abschnitt der Wasserleitung höhenverstellbar angeordnet ist.

Die Ausbildung einer Einrichtung zur Regulierung des statischen Wasserdruckes in einer sonst im wesentlichen automatisch ablaufenden Bewässerungsanlage ergibt sich daraus, daß der Wasserbedarf der Pflanzen über einen längeren Zeitraum nicht gleichbleibend ist, sodaß ein bewußter Eingriff in die durch die Kapillarwirkung des Erdreiches ansonsten selbsttätige Wasseraufnahme immer wieder vorteilhaft ist. Werden beispielsweise Pflanzen frisch gesetzt oder das Erdreich gewechselt, so ist empfehlenswert, zumindest kurzzeitig eine erhöhte Wassermenge zuzuführen, um deren Anwachsen zu erleichtern. Insbesondere in diesem Stadium kann es vorkommen, daß die Kapillarwirkung des frisch eingefüllten oder umgegrabenen Erdreiches zu gering ist, um die benötigte Wassermenge anzusaugen, sodaß durch eine Anhebung der Einrichtung und den dadurch bedingten statischen Überdruck vermehrt Wasser durch die Wasserabgabeeinrichtungen austritt. Es ist jedoch mitunter auch umgekehrt wünschenswert, die Lebensbedingungen der Pflanzen zu verschlechtern, beispielsweise um die Blütezeit zu verschieben, sodaß durch Absenkung der Regulierungseinrichtung unter das Niveau der Wasserleitung von den Pflanzen eine erhöhte Saugwirkung ausgeübt werden muß, die ein trockeneres Erdreich und damit etwas ungünstigere Lebensbedingungen schafft.

Die Höhenverstellbarkeit kann dabei dadurch erreicht werden, daß die Einrichtung zur Regulierung des statischen Wasserdrucks an einer mit einer Skala versehenen Halterung zwischen einem Niveau oberhalb des Abschnittes und einem Niveau unterhalb des Abschnittes verschiebbar ist.

Eine bevorzugte Ausführung der Einrichtung zur Regulierung des statischen Wasserdruckes umfaßt beispielsweise einen Behälter, der zwei Teilkammern aufweist. Die beiden Teilkammern sind durch eine sich nicht über die gesamte Behälterhöhe erstreckende Trennwand gebildet, wobei der Raum oberhalb der beiden Teilkammern mit einer Luftzutrittsöffnung versehen ist. Der ankommende Teil der Wasserleitung mündet in die erste Teilkammer, und aus der zweiten Teilkammer führt der abgehende Teil der Wasserleitung wieder ab, wobei der freie Überlauf des Wassers durch die Trennwand gebildet wird. Die Luftzutrittsöffnung kann durch ein Schwimmerventil verschließbar sein, um den Wasseraustritt durch die Luftzutrittsöffnung bei der Erstfüllung der Vorrichtung, wobei eine große Wassermenge auf einmal zugeführt wird, zu verhindern.

Die erfindungsgemäße Vorrichtung ist insbesondere dort einsetzbar, wo die Wasserleitung zumindest zwei Abschnitte mit unterschiedlichem Niveau durchläuft, zwischen denen eine Druckausgleichseinrichtung angeordnet ist, die durch einen freien Überlauf des Wassers zwischen den beiden Abschnitten unterschiedlichen Niveaus gebildet ist. Bei einer derartigen Anordnung ist in einer bevorzugten Ausführung vorgesehen, daß die Einrichtung zur Regulierung des statischen Wasserdruckes am Ende des höheren Abschnittes in die Druckausgleichseinrichtung eingesetzt ist, die aus einer ersten siphonartigen Schlaufe der Wasserleitung am Ende des höheren Abschnittes, an die die Einrichtung zur Regulierung des statischen Wasserdruckes angeschlossen ist, und aus einer zweiten siphonartigen Schlaufe zu Beginn des niederen Abschnittes gebildet ist.

Die siphonartigen Schlaufen am Anfang und am Ende der Wasserleitungsabschnitte ermöglichen nun eine Beeinflussung des statischen Wasserdruckes in jedem einzelnen Wasserleitungsabschnitt unabhängig von jedem anderen. Wird beispielsweise die Einrichtung zur Regulierung am Ende des ersten Abschnittes über das Niveau der Wasserleitung angehoben, so liegt in diesem Abschnitt ein geringfügig erhöhter Druck vor ; hingegen ist der Druck erniedrigt, wenn die Einrichtung unterhalb des Niveaus des ersten Wasserleitungsabschnittes abgesenkt wird. In einer bevorzugten Ausführung ist dabei weiters vorgesehen, daß die siphonartige Schlaufe der Druckausgleichseinrichtung durch einen in das Erdreich einsteckbaren Hohlkörper gebildet ist, der ein Doppelmantelrohr mit einem unteren Übergangsbereich und zwei oberen, getrennten Anschlußstücken darstellt.

Als Wasserabgabeeinrichtung für Pflanzen, die ausschließlich die benötigte Wassermenge auf Grund der kapillaren Kräfte des Erdreichs abgibt, eignen sich beispielsweise die aus der DE-A-26 55 655 bekannten Hohlkörper, deren in das Erdreich etwa vertikal einsteckbarer etwa kegelförmiger Teil wasserdurchlässig ist und vorzugsweise aus gebranntem Ton besteht. Der über die Erdoberfläche ragende, mit Anschlüssen für die Wasserleitung versehene Teil ist luftundurchlässig ausgebildet.

Jeder der Hohlkörper kann gleichzeitig auch zur individuellen Ernährung der Pflanzen verwendet werden, indem in den Luftundurchlässigen Teil des Hohlkörpers eine Düngekapsel eingesetzt wird.

Nachstehend wird nun die Erfindung an Hand der Figuren der beiliegenden Zeichnungen näher beschrieben, ohne jedoch darauf beschränkt zu sein.

Es zeigen :

Figur 1 eine erfindungsgemäße Vorrichtung zur Bewässerung von in vier Reihen übereinander angeordneten Verbrauchern, etwa zur Versorgung von Balkonpflanzen an mehreren Balkonen, und

Figuren 2 und 3 zwei Ausführungsbeispiele von Einrichtungen zur Regelung des statischen Wasserdruckes swischen zwei Niveaustufen.

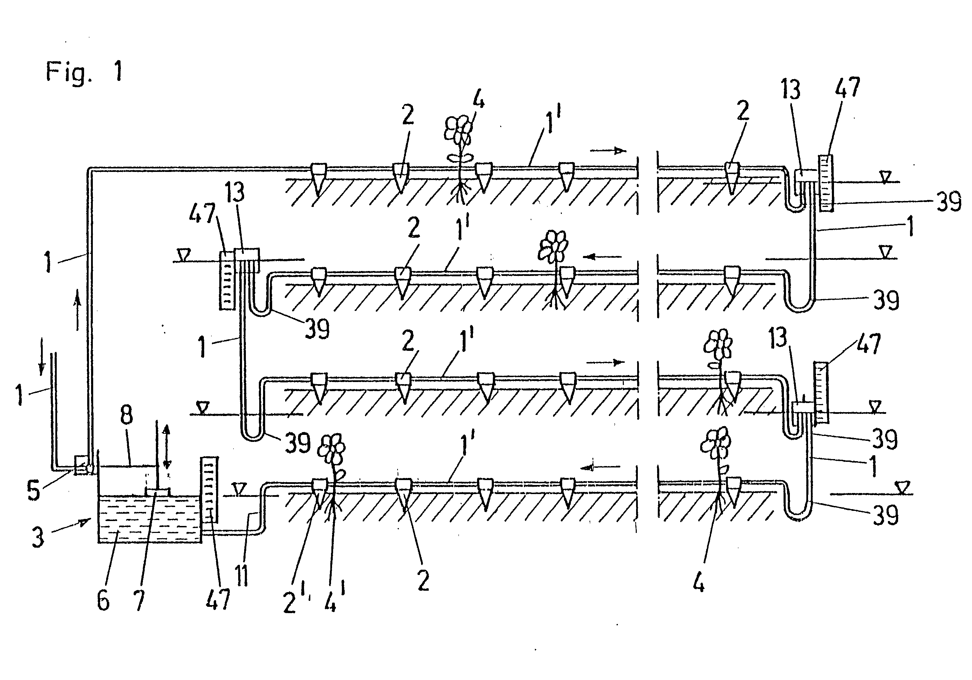

In Fig. 1 ist eine erfindungsgemäße Vorrichtung zur Bewässerung von in vier Reihen übereinander angeordneten Verbrauchern schematisch dargestellt. In den Anfangsteil einer Wasserleitung 1, die von einem nicht dargestellten Wasservorrat gespeist wird, ist ein Durchflußmengenregler 5 eingebaut. In der Fließrichtung nach dem Durchflußmengenregler 5 versorgt die Wasserleitung 1 in Serie geschaltete Wasserabgabeeinrichtungen 2, wobei in der dargestellten Ausführung die Wasserleitung 1 mehrere etwa horizontal verlegte Abschnitte 1' aufweist, die in unterschiedlichen Höhen verlaufen. Jeder Abschnitt 1' könnte beispielsweise entlang eines Balkongeländers eines mehrstöckigen Hauses angeordnet sein. Jede der Wasserabgabeeinrichtungen 2 ist einer Pflanze oder auch Pflanzengruppe zugeordnet und in das die Pflanzenwurzeln umgebende Erdreich eingesteckt. Nach der letzten Wasserabgabeeinrichtung 2' ist im Wasserleitungsabschnitt 11 eine Überwachungseinrichtung 3 angeordnet, die bei jeder Abweichung der der letzten Wasserabgabeeinrichtung 2' zufließenden Wassermenge von der vom letzten Wasserverbraucher 4' benötigten Wassermenge den Durchflußregler 5 steuert. Das heißt, daß exakt die von allen Wasserverbrauchern 4, 4' angesaugte Wassermenge in der Wasserleitung 1 zufließt und jede Bedarfsänderung sofort ausgeglichen wird. Dies ermöglicht eine individuelle Wasseransaugung durch jeden Verbraucher, da die nicht von ihm angenommene Wassermenge weiterfließt. Die Überwachungseinrichtung 3 weist einen Behälter 6 auf, in dem ein Schwimmer 7 an einem zweiarmigen Hebel 8 höhenverstellbar angeordnet ist. Der Hebel 8 ist Teil eines Quetschventils, durch das die zumindest in diesem Bereich durch einen Schlauch gebildete Wasserleitung 1 geführt ist. Bei der Erstfüllung der erfindungsgemäßen Vorrichtung weist der Schlauch vorerst einen normalen, kreisrunden Querschnitt auf. Durch die Wasserleitung 1 fließt wesentlich mehr Wasser, als die Verbraucher 4,4' benötigen, sodaß das überschüssige Wasser über den Abschnitt 11 in den Behälter 6 strömt. Das Ansteigen des Wasserspiegels in Behälter 6 bewirkt ein Anheben des Schwimmers 7 und eine Betätigung des Quetschventils, sodaß die Durchflußmenge sinkt. Sobald sich die dem Bedarf entsprechende Durchflußmenge eingestellt hat, fließt kein weiteres Wasser über den Endabschnitt 11 in den Behälter 6, Jeder Überschuß an Wasser, der den Schwimmer weiter anheben läßt, verringert sofort die Durchflußmenge.

Die Überwachungseinrichtung 3 kann eine bloße Füllstandsmeßeinrichtung sein, wenn der Behälter 6 so aufgestellt wird, daß der Wasserspiegel im Behälter 6 auf gleicher Höhe wie in der letzten Wasserabgabeeinrichtung 2' liegt und mit diesem sich ändert. Eine Unterversorgung des letzten Verbrauchers 4' läßt den Wasserspiegel in der letzten Wasserabgabeeinrichtung 2' absinken. Damit sinkt auch der Schwimmer 7 und vergrößert den Durchtrittsquerschnitt des Quetschventils.

Da die den letzten Wasserverbraucher 4' bildende Pflanze auch bei Unterdruck bestrebt ist, Wasser aus de Behälter 6 anzusaugen, was ebenfalls ein Absinken des Schwimmers 7, und damit eine Erhöhung der Durchflußmenge bewirkt, kann der Behälter 6 in der Höhe verstellbar angeordnet sein, wobei die einem gewünschten erhöhten oder erdniedrigten statischen Wasserdruck entsprechende Höhe an einer Skala 47 ablesbar sein kann. Da die Höhenverstellung des Behälters 6 selbst nicht in jedem Fall durchführbar ist, kann die Niveauänderung des Wasserspiegels auch durch eine Höhenverstellbarkeit des Schwimmers 7 am Hebel 8 erzielt werden. In Fig. 1 sind beide Möglichkeiten angedeutet.

Zur Wasserabgabe an das Erdreich eignet sich, wie erwähnt, vor allem ein Hohlkörper, der aus einem wasserdurchlässigen unteren Teil, insbesondere aus gebranntem Ton, und einem luftundurchlässigen oberen Teil, insbesondere aus Kunststoff, besteht. Der wasserdurchlässige Teil wird in das Erdreich vollständig eingesteckt und der luftundurchlässige Teil weist eine aufschraubbare Kappe auf, die mit zwei Anschlußstutzen für die Wasserleitung 1 versehen ist. Die Durchtrittsgeschwindigkeit des Wassers durch den wasserdurchlässigen Teil ist sehr gering, sodaß eine Wasserabgabe im von der Pflanze benötigten Ausmaß nur durch die Saugkraft der Wurzeln bzw. die kapillaren Kräfte des Erdreichs erfolgt. In den Hohlkörper kann eine Düngekapsel eingesetzt werden.

Durch Verwendung eines Langzeitdüngers wird es dadurch möglich, die Düngung dem tatsächlichen, in verschiedenen Jahreszeiten unterschiedlichen Bedarf der Pflanzen anzupassen. Wird etwa die Kapsel im Frühjahr in den Hohlkörper eingesetzt, so lösen sich die Nährsalze anfangs sehr langsam, später jedoch rascher. Die Konzentration der Nährlösung erreicht dann etwa zur Zeit des größten Nährstoffbedarfes im späten Frühjahr bzw. zu Beginn des Sommers ein Maximum, das über geraume Zeit, beispielsweise vier bis fünf Monate etwa konstant bleibt, und sodann im Herbst wieder geringer wird, bzw. auf null zustrebt, zu welcher Jahreszeit der Nährstoffbedarf der Pflanzen ohnedies gerin ist.

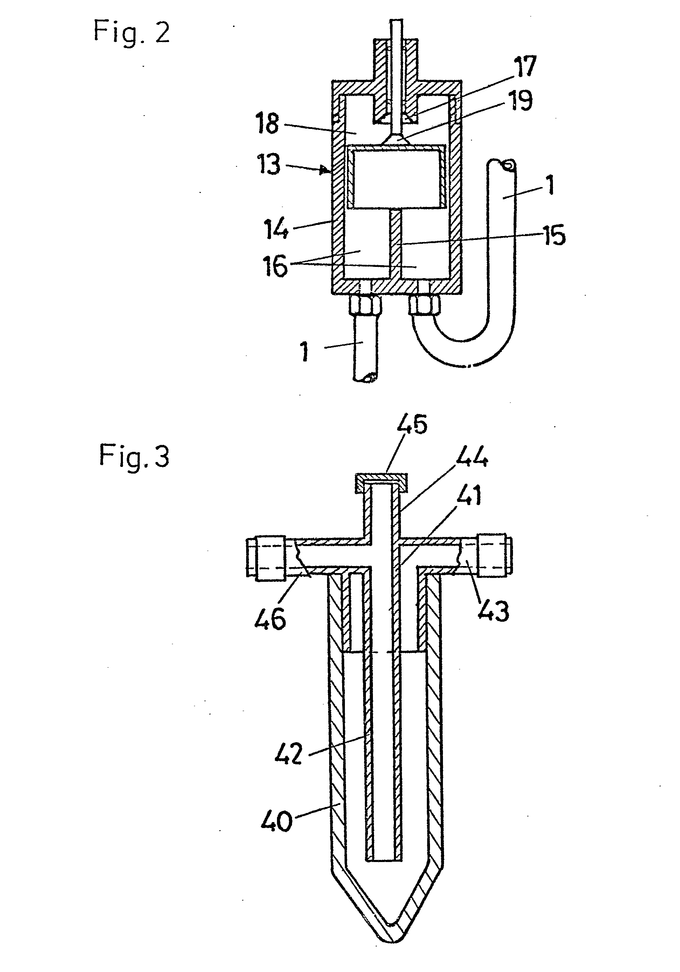

In Fig. 1 ist die Wasserleitung über mehrere Abschnitte 1' unterschiedlicher Höhe geführt. In diesem Fall sind auch zwischen den einzelnen Niveaustufen Einrichtungen 13 zur Regulierung des statischen Wasserdruckes jeweils am Ende eines Abschnittes 1' vorgesehen. Dabei herrscht etwa derselbe Druck in der gesamten Wasserleitung 1, wenn die Einrichtungen 13 jeweils in derselben Höhe angeordnet werden. Vor und nach jeder Einrichtung 13 ist eine siphonartige Schlaufe 39 vorgesehen. Die Einrichtung 13 (Fig. 2) besteht beispielsweise aus einem Behälter 14, der durch eine über einen Teil seiner Höhe sich erstreckende Trennwand 15 in zwei Teilkammern 16 und einen darüber angeordneten, diese verbindenden Raum 18 unterteilt ist. Im Deckel des Behälters ist eine Luftzutrittsöffnung 17 vorgesehen, die durch ein Schwimmerventil 19 verschließbar ist. Das Wasser fließt über die Wasserleitung 1 aus der siphonartigen Schlaufe 39 in die eine Teilkammer 16 zu, über die Trennwand 15 in die zweite Teilkammer 16 über, und in die nächste siphonartige Schlaufe 39 der Wasserleitung 1 ab. Der Druckausgleich wird durch den Luftzutritt erzielt, wobei die beiden Schlaufen 39 vor und nach jeder Einrichtung 13 zur Regulierung des statischen Wasserdruckes das Eindringen von Luft in die Wasserleitung 1 vermeiden. Das Schwimmerventil 19 dient zum Abschluß der Behälter bei der Erstfüllung der erfindungsgemäßen Vorrichtung. Soll im jeweiligen Abschnitt ein erhöhter oder erniedrigter statischer Druck erzeugt werden, wird die Einrichtung 13 vertikal verschoben, sodaß die Oberkante der Trennwand 15 oberhalb oder unterhalb des Wasserstandes im vorangehenden Wasserleitungsabschnitt 1′ zu liegen kommt. Dabei ist an jeder Einrichtung 13 eine entsprechende Skala 47 vorgesehen, an Hand der der Druck im Leitungsabschnitt 1′ erkannt werden kann. Fig. 3 zeigt eine Einrichtung 13 zur Regulierung, die anstelle der siphonartigen Leitungsschlaufe 39 am Ende und zu Beginn jedes Abschnittes 1′ verwendbar und selbst in das Erdreich einsteckbar ist. Sie weist einen hohlen Einsteckteil 40 auf, in dem ein Rohreinsatz 41 verschiebbar ist. Der Rohreinsatz 41 ist mit einem nach unten in den Einsteckteil 40 ragenden Steigrohr 42, einem vom Steigrohr 42 abzweigenden Abflußstutzen 46, sowie mit einem in den Einsteckteil 40 mündenden Zuflußstutzen 43 verbunden, an den der Wasserleitungsabschnitt 1 anschließbar ist. Der obere Teil des Steigrohres 42 dient als Entlüftungsöffnung 44, die im Betriebszustand durch eine Kappe 45 verschlossen ist, und während des Füllvorganges geöffnet werden kann. Die Einrichtung nach Fig. 3 kann gleichzeitig auch als Wasserabgabeeinrichtung 2 verwendet werden, wenn der Einsteckteil 40 durch einen zumindest im unteren Bereich wasserdurchlässigen Teil, ersetzt wird.

**Patentansprüche**

1. Vorrichtung zur dauernden Zuführung einer dem gemeinsamen Wasserbedarf von Wasserverbrauchern (4,4′) in Form von Kulturpflanzen angepaßten Wassermenge mit zumindest zwei Wasserabgabeeinrichtungen (2,2′), die nacheinander in eine von einem Wasservorrat gespeiste Wasserleitung (1) eingesetzt sind und unter Einwirkung der kapillaren Kräfte des Erdreichs die von den Wasserverbrauchern (4,4′) benötigte Wassermenge abgeben, wobei vor der ersten Wasserabgabeeinrichtung (2) in die Wasserleitung (1) ein Durchflußmengenregler (5) eingesetzt ist, der von einer nach der letzten Wasserabgabeeinrichtung (2′) vorgesehenen, die dieser zufließende Wassermenge mit der vom letzten Wasserverbraucher (4′) benötigten Wassermenge kontinuierlich vergleichenden Überwachungseinrichtung (3) gesteuert ist, dadurch gekennzeichnet, daß am Ende eines eine Reihe von im wesentlichen in gleicher Höhe angeordneten Wasserverbrauchern (4) versorgenden Abschnittes (1′) der Wasserleitung (1), die einen geschlossenen Querschnitt aufweist, eine Einrichtung (13) zur Regulierung des Statischen Wasserdruckes in diesem Abschnitt (1′) der Wasserleitung (1) höhenverstellbar angeordnet ist.

2. Vorrichtung nach Anspruch 1, dadurch gekennzeichnet, daß die Einrichtung (13) zur Regulierung des statischen Wasserdrucks an einer mit einer Skala (47) versehenen Halterung zwischen einem Niveau oberhalb des Abschnittes (1′) und einem Niveau unterhalb des Abschnittes (1′) verschiebbar ist.

3. Vorrichtung nach Anspruch 1 oder 2, dadurch gekennzeichnet, daß die Einrichtung (13) zur Regulierung des statischen Wasserdruckes einen Behälter (14) umfaßt, der durch eine Trennwand (15) in zwei oberhalb der Trennwand (15) miteinander verbundene Teilkammern (16) unterteilt ist, wobei die Wasserleitung (1) in eine Teilkammer (16) mündet und aus der anderen Teilkammer (16) abführt, und der eine Luftzutrittsöffnung (17) in den Raum (18) oberhalb der beiden Teilkammern (16) aufweist.

4. Vorrichtung nach Anspruch 3, dadurch gekennzeichnet, daß der Luftzutrittsöffnung (17) ein Schwimmerventil (19) zugeordnet ist.

5. Vorrichtung nach einem der Ansprüche 1-4, bei der die Wasserleitung (1) in zumindest zwei Abschnitten (1′) unterschiedlichen Niveaus angeordnet ist, zwischen denen eine Druckausgleichseinrichtung vorgesehen ist, die durch einen freien Überlauf des Wassers zwischen den beiden Abschnitten (1′) unterschiedlichen Niveaus gebildet ist, dadurch gekennzeichnet, daß die Einrichtung (13) zur Regulierung des statischen Wasserdruckes am Ende des höheren Abschnittes (1′) in die Druckausgleichseinrichtung eingesetzt ist die aus einer ersten siphonartigen Schlaufe (39) der Wasserleitung (1) am Ende des höheren Abschnittes (1′), an die die Einrichtung (13) zur Regulierung des statischen Wasserdruckes angeschlossen ist, und aus einer zweiten siphonartigen Schlaufe (39) zu Beginn des niederen Abschnittes (1′) gebildet ist.

6. Vorrichtung nach Anspruch 5, dadurch gekennzeichnet, daß die siphonartige Schlaufe (39) der Druckausgleichseinrichtung durch einen in das Erdreich einsteckbaren Hohlkörper gebildet ist, der ein Doppelmantelrohr (40, 42) mit einem unteren Übergangsbereich und zwei oberen, getrennten Anschlußstücken (43, 46) darstellt.

7. Vorrichtung nach Anspruch 6, dadurch gekennzeichnet, daß der Hohlkörper als Wasserabgabeeinrichtung ausgebildet ist, und sein ins Erdreich einzusteckender Teil aus gebranntem Ton besteht und wasserdurchlässig, sein über die Erdoberfläche ragender Teil luftundurchlässig ist.

**Claims**

1. Apparatus for continuously supplying an amount of water adapted to the common water need of water consumers (4, 4′) in the form of cultivated plants, comprising at least two water supply means (2, 2′) which are arranged one after the other in a water conduit (1) fed by a water reservoir and supply, under the action of the capillary forces of the soil, the amount of water required by the water consumers, (4, 4'), flow regulating means (5) being arranged in the water conduit (1) before the first water means (2), said flow regulating means being controlled by control means (3) which are provided after the last water supply means (2') and continuously compare the amount of water flowing to said last water supply means with the amount of water required by the last water consumer (4'), characterized in that at the end of a section (1') of the water conduit (1), which has a closed cross-section and supplies a row of water consumers (4) arranged substantially at the same level, means (13) regulating the static water pressure in said section (1') of the water conduit (1) are height-adjustably arranged.

2. Apparatus according to claim 1, characterized in that the means (13) for regulating the static water pressure are displaceable at holding means, which are provided with a scale (47), between a level above the section (1') and a level below the section (1').

3. Apparatus according to claim 1 or 2, characterized in that the means (13) for regulating the static water pressure comprise a reservoir (14) which is by means of a partition wall (15) divided into two compartments (16) connected to each other above the partition wall (15), the water conduit leading into one compartment (16) and leading off the other compartment (16), said reservoir further comprising an air inlet opening (17) into the space (18) above the two compartments (16).

4. Apparatus according to claim 3, characterized in that a float valve (19) in associated with the air inlet opening (17).

5. Apparatus according to one of claims 1-4, in which the water conduit (1) is arranged in two sections (1') at different levels between which pressure compensating means are provided which are formed by a free overflow of the water between the two sections (1') at different levels, characterized in that the means (13) for regulating the static water pressure are arranged in the pressure compensating means at the end of the higher-level section (1'), said means being formed by a first siphon-like loop (39) of the water conduit (1) at the end of the higher-level section (1'), the means (13) for regulating the static water pressure being connected to said loop, and by a second siphon-like loop (39) at the beginning of the lower-level section (1').

6. Apparatus according to claim 5, characterized in that the siphon-like loop (39) of the pressure compensating means is formed by a hollow body insertable into the soil and forming a double-walled tube (40, 42) comprising a lower transition region and two upper separate connecting pieces (43, 46).

7. Apparatus according to claim 6, characterized in that the hollow body is designed as a water supply means, and that its portion insertable into the soil is made of burnt clay and permeable to water, its portion extending above the soil being air-tight.

## Revendications

1. Dispositif pour amener en continu la quantité d'eau adaptée à l'ensemble de l'eau dont ont besoin des consommateurs (4, 4') sous la forme des plantes cultivées qui comprend, au moins, deux dispositifs de distribution d'eau (2, 2') qui sont intercalés, en série, dans une conduite d'eau (1) alimentée par une réserve d'eau et qui, par l'action capillaire du terrain, délivrent la quantité d'eau dont ont besoin les consommateurs (4, 4'), et où, la conduite d'eau (1) renferme, devant le premier dispositif de distribution (2), un régulateur de débit (5) qui est commandé par un dispositif de surveillance (3) qui compare en continu la quantité d'eau qui afflue à celui-ci avec la quantité dont a besoin le dernier consommateur d'eau (4'), caractérisé en ce que, à l'extrémité d'une section (1') de la conduite d'eau (1), alimentant une rangée de consommateurs (4) disposés pratiquement à la même hauteur, laquelle présente une section fermée, est monté réglable en hauteur, un dispositif (13) pour régler la pression statique dans cette section (1') de la conduite d'eau (1).

2. Dispositif selon la revendication 1, caractérisé en ce que le dispositif (13) pour régler la pression statique de l'eau est monté sur un support pourvu d'une échelle (47) de façon à pouvoir être déplacé entre un niveau situé au-dessus de la section (1) et un niveau situé au-dessous de la section (1').

3. Dispositif selon la revendication 1 ou 2, caractérisé en ce que le dispositif (13) pour régler la pression statique de l'eau comprend un réservoir (14) qui est séparé par une cloison (15) en deux chambres partielles (16) reliées ensemble au-dessus de la cloison (5), la conduite d'eau (1) débouchant dans l'une des chambres partielles (16) et ressortant par l'autre (16), un orifice de ventilation (17) étant prévu dans l'espace (18), au-dessus des deux chambres partielles (16).

4. Dispositif selon la revendication 3, caractérisé en ce que l'ouverture de ventilation (17) comporte une valve à flotteur (19).

5. Dispositif selon l'une quelconque des revendications 1 à 4, dans lequel la conduite d'eau (1) comprend, au moins, deux sections (1') situées à des niveaux différents entre lesquelles est prévu un dispositif d'égalisation de pressions formé par un trop-plein permettant un débordement libre de l'eau entre les deux sections (1') situées à des niveaux différents, caractérisé en ce que le dispositif (13) pour régler la pression statique de l'eau est monté dans le dispositif d'égalisation des pressions, à l'extrémité de la section (1') plus élevée, ce dispositif se composant d'une première boucle en forme de siphon (39) de la conduite d'eau (1) située à l'extrémité de la section plus élevée (1'), à laquelle est raccordé le dispositif (13) pour régler la pression statique de l'eau, et d'une seconde boucle en siphon (39) reliée au commencement de la section (1') plus basse.

6. Dispositif selon la revendication 5, caractérisé en ce que la boucle en siphon (39) du dispositif d'égalisation des pressions est formée par un corps creux pouvant être enfoncé dans le sol, qui représente un tuyau à double paroi (40, 42) comprenant une région de transition inférieure et deux raccords supérieurs séparés (43, 46).

7. Dispositif selon la revendication 6, caractérisé en ce que le corps creux est formé de manière à constituer un dispositif de distribution d'eau, dont la partie appelée à être enfoncée dans l'eau est en argile cuite et est imperméable à l'eau, tandis que la partie s'élevant au-dessus de la surface du sol est imperméable à l'air.

Fig. 1

Fig. 2

Fig. 3